# EUROPÄISCHE PATENTANMELDUNG

(11) **EP 2 679 867 A1**
(43) Veröffentlichungstag der Anmeldung: **01.01.2014**
(21) Anmeldenummer: 13002856.6
(22) Anmeldetag: 03.06.2013
(51) Int. Cl.: F16H 57/08, F03D 11/02

(54) **Planetengetriebe**

(30) Priorität: 28.06.2012 DE 102012012900
(71) Anmelder: ROBERT BOSCH GMBH, 70442 Stuttgart (DE)
(72) Erfinder: Weist, Dietmar, 44379 Dortmund (DE)
(74) Vertreter: Wiesmann, Stephan

(57) **Zusammenfassung**

Die vorliegende Erfindung betrifft ein Planetengetriebe (2) zur Umwandelung einer langsamen Drehbewegung einer Antriebswelle (5) in eine schnelle Drehbewegung einer Abtriebswelle (6), wobei das Planetengetriebe (2) auf einem Planetenradträger (7) eine Lageranordnung zur drehbaren Lagerung eines Planetenrades (8) aufweist, umfassend mindestens zwei axial beabstandet zueinander zwischen dem Planetenrad (8) und dem Planetenradträger (7) angeordnete Kegelrollenlager (9a, 9b), wobei die mindestens zwei Kegelrollenlager (9a, 9b) jeweils einen Innenring (10a, 10b) und einen Außenring (11 a, 11 b) aufweisen, und an einer Außenumfangsfläche des Planetenträgers (7) zwischen den zwei Innenringen (10a, 10b) ein Zwischenring (12) zur axialen Positionierung der mindestens zwei Kegelrollenlager (9a, 9b) auf dem Planetenradträger (7) angeordnet ist, wobei ferner an einer Innenumfangsfläche des Planetenrades (8) zwischen den zwei Außenringen (11a, 11b) radial entlang des Innenumfangs des Planetenrades (8) ein Bund (13) zur axialen Sicherung des Planetenrades (8) ausgebildet ist, und an der Innenumfangsfläche des Planetenrades (8) mindestens ein Zwischenring (14) zur axialen Positionierung der mindestens zwei Kegelrollenlager (9a, 9b) zueinander angeordnet ist, welcher an einer Außenumfangsfläche eine zum Bund (13) gerichtete und mindestens der axialen Länge des Bundes (13) entsprechende Aussparung (14) aufweist.

## Beschreibung

Die vorliegende Erfindung betrifft ein Planetengetriebe zur Umwandelung einer langsamen Drehbewegung einer Antriebswelle in eine schnelle Drehbewegung einer Abtriebswelle, wobei das Planetengetriebe auf einem Planetenradträger eine Lageranordnung zur drehbaren Lagerung eines Planetenrades aufweist, umfassend mindestens zwei axial beabstandet zueinander zwischen dem Planetenrad und dem Planetenradträger angeordnete Kegelrollenlager, wobei die mindestens zwei Kegelrollenlager jeweils einen Innenring und einen Außenring aufweisen, und an einer Außenumfangsfläche des Planetenträgers zwischen den zwei Innenringen ein Zwischenring zur axialen Positionierung der mindestens zwei Kegelrollenlager auf dem Planetenradträger angeordnet ist, wobei ferner an einer Innenumfangsfläche des Planetenrades zwischen den zwei Außenringen radial entlang des Innenumfangs des Planetenrades ein Bund zur axialen Sicherung des Planetenrades ausgebildet ist.

Das Anwendungsgebiet der Erfindung erstreckt sich auf Planetengetriebe wie sie im Antriebsstrang einer Windkraftanlage mit einer Leistung von mindestens 1 MW vorkommen. Wichtige Merkmale solcher Planetengetriebe sind unter anderem die Abmessungen und das Gewicht. Dabei kommt es bei der Auslegung der Getriebeteile neben der Werkstoffauswahl und den konstruktiven Aspekten auch auf die herrschenden Kräfte und Drehmomente an, welche auf das Planetengetriebe wirken. Derartige Planetengetriebe unterliegen außergewöhnlichen Beanspruchungen, die aufgrund ihrer baulichen Lage und dem ungleichmäßig wechselndem Belastungskollektivs hervorgerufen werden.

### HINTERGRUND DER ERFINDUNG

Aus der DE 10 2006 051 817 A1 geht eine Lageranordnung zur drehbaren Lagerung eines Planetenrades auf einem Planetenträger, mit zwei mit axialem Abstand zueinander angeordneten Kegelrollenlagern hervor, wobei zwischen den Kegelrollenlagern mindestens ein Radiallager angeordnet ist, um die Tragfähigkeit der Lageranordnung zu erhöhen. Das zwischen den Kegelrollenlagern angeordnete Radiallager ist hinsichtlich des Lagerspiels bzw. der Lagervorspannung einstellbar, um die Tragfähigkeit der Lageranordnung gleichmäßig zu verteilen. Ferner ist an dem Planetenrad ein radial nach innen weisender Ringsteg ausgebildet, dessen radial nach innen weisende Mantelfläche sich auf der radial äußeren Mantelfläche des Außenringes des Radiallagers abstützt. Weitere Aufgaben oder Problemlösungen des nach innen weisenden Ringstegs gehen aus der Druckschrift nicht hervor.

Des Weiteren geht aus der EP 1 837 535 A1 ein Planetenrad hervor, dass auf einem Planetenträger eines Planetengetriebes drehbar gelagert ist, wobei die Lagerung zwei sich im axialen Abstand zueinander befindlicher Kegelrollenlager aufweist, die in X-Anordnung positioniert sind. Zwischen einem Innenring des einen Kegelrollenlagers und einem Innenring des anderen Kegelrollenlagers ist ein Distanzring angeordnet, welcher in Umfangsrichtung segmentiert ist und Bestandteil einer Gruppe verschiedener Distanzringe mit abgestaffelt unterschiedlicher Breite ist. Die Vorspannung in zweireihigen Kegelrollenlagern wird durch den Distanzring definiert, dessen Breite folglich genau an die benötigten Gegebenheiten und an das gewünschte Lagerspiel bzw. die gewünschte Lagervorspannung angepasst ist.

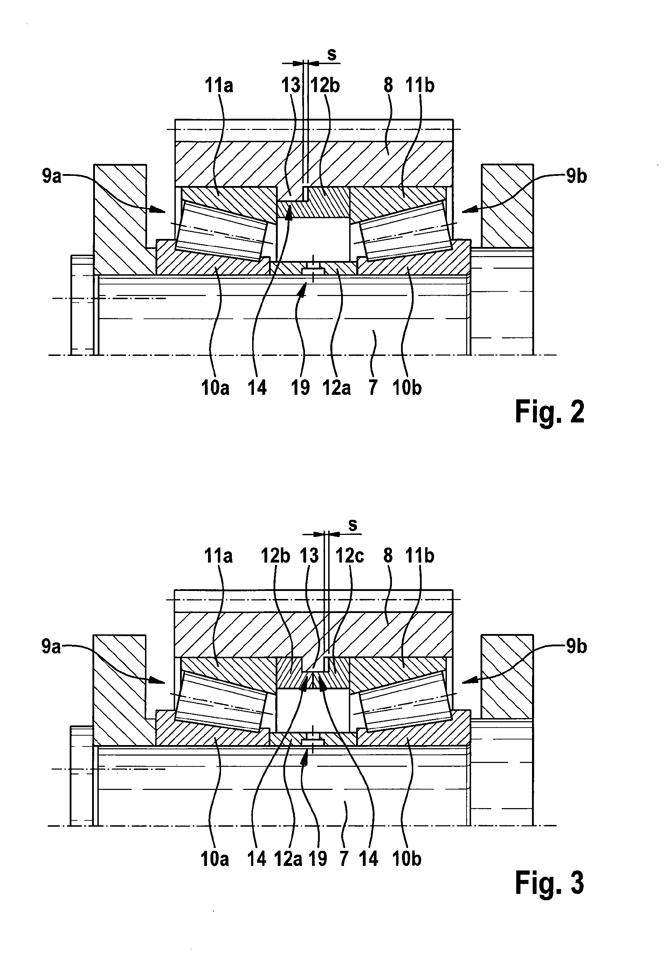

Aus der EP 1 252 442 B1 geht darüber hinaus eine Getriebeeinheit für eine Windturbinenanordnung hervor. Diese umfasst eine Planetenradstufe, bei der ein Planetenrad auf einem Planetenradträger durch zwei Lager drehbar gelagert ist, wobei die Lager axial beabstandet sind bzgl. der Rotationsachse des Planetenrades. Bei den Lagern handelt es sich um kegelförmige Lager, welche in einem Oberflächenbereich des Planetenrades zum Kontakt kommen. Aus Figur 2b ist ein zentraler, integrierter Planetenradabschnitt zu sehen, welcher sich radial einwärts zwischen den axial beabstandeten Lagern erstreckt.

Aus dem allgemein bekannten Stand der Technik geht hervor, dass zur axialen Sicherung eines Planetenrades Sicherungsringe eingesetzt werden können. Der Nachteil an dieser bekannten Lösung ist, dass Sicherungsringe einem axialen Verschleiß unterliegen. Ferner wirken bei Planetengetrieben für Windkraftanlagen Drehmomente im MN-Bereich, sodass die konstruktive Auswahl von Sicherungsringen mit weiteren Risiken verbunden sein kann. Um das Problem der verschleißanfälligen Sicherungsringe zu beheben, sind des Weiteren Lösungen bekannt, bei denen zur axialen Sicherung des Planetenrades ein verschleißfester Bund vorgesehen ist, der stirnseitig an beiden Lagern anliegt. Nachteilig an dieser bekannten Lösung ist, dass das Lagerspiel des Kegelrollenlagers nur sehr aufwändig durch spanende Verfahren oder Schleifverfahren eingestellt werden kann.

### OFFENBARUNG DER ERFINDUNG

Es ist daher die Aufgabe der vorliegenden Erfindung, eine Windkraftanlage, insbesondere ein Planetengetriebe einer Windkraftanlage bereitzustellen, welches hinsichtlich der Lagerspieleinstellung und der Wartung optimiert ist. Ferner soll die Montage und Vorspannung der Lager auf eine einfache Art und Weise möglich sein.

Die Aufgabe wird ausgehend von einer Windkraftanlage gemäß dem Oberbegriff von Anspruch 1 in Verbindung mit dessen kennzeichnenden Merkmalen gelöst. Vorteilhafte Weiterbildungen der Erfindung gehen aus den nachfolgenden abhängigen Ansprüchen hervor.

Erfindungsgemäß ist an der Innenumfangsfläche des Planetenrades mindestens ein Zwischenring zur axialen Positionierung der mindestens zwei Kegelrollenlager zueinander angeordnet, welcher an einer Außenumfangsfläche eine zum Bund gerichtete und mindestens der axialen Länge des Bundes entsprechende Aussparung aufweist. Vorzugsweise weisen mindestens zwei Planetenräder des Planetengetriebes eine Geradverzahnung oder eine Schrägverzahnung auf.

Der Bund erstreckt sich radial über den Innenumfang des Planetenrades und weist vorteilhafterweise abgerundete Ecken und Freistiche zur Verringerung der Kerbwirkung auf. Dadurch, dass der Bund ein Teil des Planetenrades ist und der Zwischenring an diesem anliegt, wirkt der Bund wie ein massiver, verschleißfester Sicherungsring. Somit ist es möglich das mindestens eine Kegelrollenlagerpaar mit voreingestelltem Lagerspiel zu beziehen und eine aufwendige Lagerspieleinstellung mit dem Planetenrad entfällt. Ferner ist die Vorspannung der mindestens zwei Kegelrollenlager über den Zwischenring am Planetenradträger und den Zwischenring am Planetenrad einstellbar.

Gemäß einer bevorzugten Ausführungsform kommt der Bund an einer axial nach innen gerichteten Stirnfläche einer der Außenringe zur Anlage. Der Bund übernimmt durch eine derartige Anordnung die Aufgabe des Sicherungsringes, übertrifft diesen aber bei der Betriebssicherheit und Belastbarkeit. Um die Voreinstellung des Lagerspiels zu ermöglichen, sollte der Bund nicht den gesamten Zwischenraum zwischen den beiden Außenringe der Kegelrollenlager ausfüllen, sondern relativ schmal im Vergleich zum Zwischenring ausgebildet sein. Vorteilhafterweise ist der Bund höchstens halb so breit wie der Zwischenring.

Gemäß einer zweiten bevorzugten Ausführungsform ist der Bund im Wesentlichen mittig zwischen den beiden Außenringen ausgebildet, wobei an den beiden axialen Stirnflächen des Bundes jeweils ein Zwischenring angeordnet ist. Die beiden Zwischenringe kommen an ihren axialen Stirnflächen zur Anlage. Diese Ausführungsform erlaubt eine mittige Anordnung des Bundes, benötigt jedoch zwei Zwischenringe die miteinander und mit dem Bund in Wirkverbindung stehen. Die beiden Zwischenringe sollten jeweils eine Aussparung aufweisen, so dass der Bund wie ein Zahn in diese Lücke passt.

Es wird weiterhin vorgeschlagen, dass die mindestens zwei Kegelrollenlager eine O-Anordnung der Wälzlagerelemente aufweisen. Durch die O-Anordnung ist der Abstand der Druckkegelspitzen zueinander, die sogenannte Stützbasis, größer, da die Wirklinien nach außen verlaufen. Unter anderem wird dadurch die Stabilität, aufgrund eines geringeren Kippspiels gesteigert.

Gemäß einer die Erfindung weiter verbessernden Maßnahme wird vorgeschlagen, dass der mindestens eine Zwischenring und das Planetenrad verschleißmindernde Oberflächen aufweisen. Verschleißmindernde Oberflächen können durch Wärmebehandlungen und/oder Beschichtungen erzeugt werden. Vorteilhafterweise werden sowohl das Planetenrad als auch der Zwischenring im Rahmen einer Wärmebehandlung gehärtet. Ferner ist eine verschleißmindernde Beschichtung der Umfangsflächen des Bordes und des gesamten Zwischenringes denkbar.

Des Weiteren bevorzugt ist zwischen dem mindestens einen Zwischenring und dem Planetenrad eine Spielpassung vorgesehen. Die Spielpassung erleichtert erheblich die Montage und erfüllt die Aufgabe, die Kegelrollenlager axial zu Positionieren. Somit ist vorzugsweise an allen Umfangsflächen des Bundes, die mit den Umfangsflächen des Zwischenringes in Berührung kommen würden, ein Spiel vorgesehen.

Es wird weiterhin vorgeschlagen, dass die axialen Stirnflächen des Bundes und die axialen Stirnflächen des mindestens einen Zwischenringes hart gedreht und/oder plangeschliffen sind. Das harte Nachdrehen der Stirnflächen erlaubt eine präzise Einstellung der Breite des Bundes und des mindestens einen Zwischenringes. Somit ist eine präzise Positionierung der mindestens zwei Kegelrollenlager realisierbar. Ferner erhöht das Planschleifen der axialen Stirnflächen die Oberflächengüte und verringert die Anfälligkeit für Rissbildung.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Fig.1: eine schematische Seitenansicht einer Windkraftanlage,
- Fig.2: eine schematische Längsschnittdarstellung der erfindungsgemäßen Lageranordnung samt Bund am Planetenrad, und
- Fig.3: eine zweite Ausführungsform der erfindungsgemäßen Lageranordnung samt Bund am Planetenrad.

### DETAILLIERTE BESCHREIBUNG EINER BEVORZUGTEN AUSFÜHRUNGSFORM

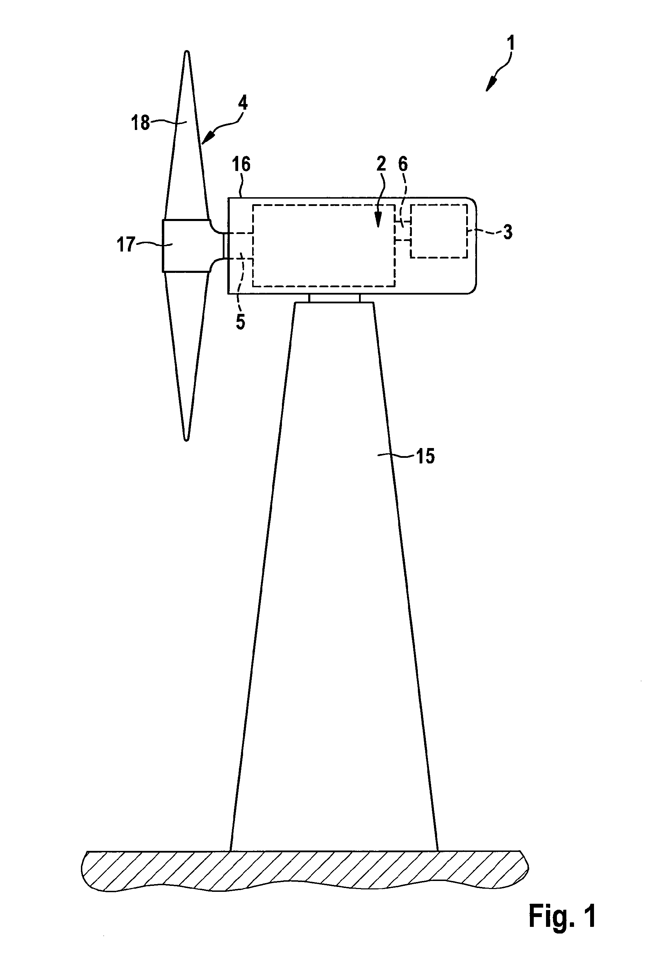

Figur 1 zeigt eine Seitenansicht einer Windkraftanlage 1 mit ihren wesentlichen Baugruppen. Die Windkraftanlage 1 weist einen Turm 15 auf, auf dem eine um eine Vertikalachse drehbar gelagerte Gondel 16 in Form eines Maschinengehäuses angeordnet ist. In der Gondel 16 ist ein Planetengetriebe 2 drehfest befestigt, wobei das Planetengetriebe 2 eine Antriebswelle 5 und eine Abtriebswelle 6 aufweist. Die Antriebswelle 5 des Planetengetriebes 2 ist mit einer Nabe 17 eines mehrere Rotorblätter 18 aufweisenden Rotors 4 verbunden. Die Abtriebswelle 6 ist mit einer anzutreibenden Antriebsvorrichtung in Form eines Generators 3 drehverbunden.

Das Planetengetriebe 2 ist so ausgelegt, dass es eine langsame Drehbewegung der Antriebswelle 5 in eine schnelle Drehbewegung der Abtriebswelle 6 umsetzt. Dazu weist das Planetengetriebe 2 eine oder mehrere Planetenradstufen auf, die über ein abschließendes Stirnradgetriebe mit der Abtriebswelle 6 zusammenwirken. Mittels der Windkraftanlage 1 wird elektrische Energie erzeugt, indem der von dem Wind in Drehbewegung versetzte Rotor 4 die Drehbewegung auf die Antriebswelle 5 in das Planetengetriebe 2 einleitet. Das Planetengetriebe 2 setzt die Drehbewegung in eine schnellere Drehbewegung um und schließlich wird über die Abtriebswelle 6 die schnelle Drehbewegung zur Erzeugung von Strom auf den Generator 3 übertragen.

In Figur 2 ist ein Planetenträger 7 zu sehen, auf dem zwei Kegelrollenlager 9a, 9b angeordnet sind. Die Kegelrollenlager 9a, 9b weisen eine O-Anordnung auf. Die Außenringe 11 a, 11 b der Kegelrollenlager 9a, 9b kommen an einem Planetenrad 8 zum anliegen, wobei das Planetenrad 8 ein sich über die Innenumfangsfläche erstreckender Bund 13 aufweist. Der Bund 13 ist zwischen den Außenringen 11 a, 11 b angeordnet, wobei dieser an einer axialen Stirnfläche des Außenringes 11a anliegt. Zwischen den beiden Außenringen 11 a, 11 b ist ein Zwischenring 12b angeordnet, wobei dieser an den axialen Stirnflächen der Außenringe 11a, 11 b anliegt. Ferner ist zwischen dem Planetenrad 8 samt Bund 13 und dem Zwischenring 12b eine Spielpassung s vorgesehen. Zwischen den Innenringen 10a, 10b ist ebenfalls ein Zwischenring 12a mit Spielpassung angeordnet. Der Zwischenring 12a weist eine Bohrung 19 auf, durch die das Schmiermittel zum Schmieren und Kühlen der beiden Kegelrollenlager 9a, 9b strömen kann. Über die Beiden Zwischenringe 12a, 12b wird die Position der Kegelrollenlager 9a, 9b zueinander bestimmt, wobei der Bund 13 zur axialen Sicherung der Planetenrades 8 eingesetzt wird. Darüber hinaus ist über die beiden Zwischenringe 12a, 12b eine Vorspannung auf die beiden Kegelrollenlager 9a, 9b aufbringbar.

Die axialen Stirnflächen des Bundes 13 und die axialen Stirnflächen des Zwischenringes 12b sind hart gedreht und plangeschliffen. Das Planschleifen der axialen Stirnflächen erhöht die Oberflächengüte und verringert die Anfälligkeit für Rissbildung. Um die Verschleißbeständigkeit des Zwischenringes 12b und des Planetenrades 8 zu erhöhen, werden die beiden Bauteile gehärtet. Zudem weist der Bund 13 und der Zwischenring 12b eine verschleißmindernde Beschichtung auf. Eine solche verschleißmindernde Schicht ist vorzugsweise durch Phosphatieren aufbringbar.

Figur 3 zeigt eine weitere Ausführungsform, wobei in dieser Ausführungsform der Bund 13 mittig zwischen den beiden Außenringen 11a, 11 b ausgebildet ist. Des Weiteren ist an den beiden axialen Stirnflächen des Bundes 13 jeweils ein Zwischenring 12b, 12c angeordnet, wobei die beiden Zwischenringe 12b, 12c an ihren axialen Stirnflächen zur Anlage kommen. Ferner ist zwischen dem Planetenrad 8 samt Bund 13 und dem Zwischenring 12c eine Spielpassung s vorgesehen.

Die Erfindung ist nicht beschränkt auf die vorstehend beschriebenen bevorzugten Ausführungsbeispiele. Es sind vielmehr auch Abwandlungen hiervon denkbar, welche vom Schutzbereich der nachfolgenden Ansprüche mit umfasst sind. So ist es beispielsweise auch möglich, die Außenringe 11a, 11 b der Kegelrollenlager 9a, 9b derart auszubilden, dass der Zwischenring 12b als Einzelteil entfällt, der Bund 13 jedoch erhalten bleibt. Dazu sollte vorzugsweise einer der Außenringe 11 a, 11 b an einer axialen Stirnfläche die Geometrie des Zwischenringes 12b aufweisen, so dass der Zwischenring 12b in einem der Außenringe 11 a, 11 b integriert ist. Des Weiteren ist es auch denkbar, dass die Lageranordnung zur drehbaren Lagerung des Planetenrades 8 vier Kegelrollenlager 9 aufweist.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Windkraftanlage
- 2: Planetengetriebe
- 3: Generator
- 4: Rotor
- 5: Antriebswelle
- 6: Abtriebswelle
- 7: Planetenradträger
- 8: Planetenrad
- 9a, 9b: Kegelrollenlager
- 10a, 10b: Innenring
- 11a, 11b: Außenring
- 12a, 12b, 12c: Zwischenring
- 13: Bund
- 14: Aussparung
- 15: Turm
- 16: Gondel
- 17: Nabe
- 18: Rotorblätter
- 19: Bohrung
- s: Spielpassung

## Patentansprüche

1. Planetengetriebe (2) zur Umwandelung einer langsamen Drehbewegung einer Antriebswelle (5) in eine schnelle Drehbewegung einer Abtriebswelle (6), wobei das Planetengetriebe (2) auf einem Planetenradträger (7) eine Lageranordnung zur drehbaren Lagerung eines Planetenrades (8) aufweist, umfassend mindestens zwei axial beabstandet zueinander zwischen dem Planetenrad (8) und dem Planetenradträger (7) angeordnete Kegelrollenlager (9a, 9b), wobei die mindestens zwei Kegelrollenlager (9a, 9b) jeweils einen Innenring (10a, 10b) und einen Außenring (11a, 11b) aufweisen, und an einer Außenumfangsfläche des Planetenradträgers (7) zwischen den zwei Innenringen (10a, 10b) ein Zwischenring (12a) zur axialen Positionierung der mindestens zwei Kegelrollenlager (9a, 9b) auf dem Planetenradträger (7) angeordnet ist, wobei ferner an einer Innenumfangsfläche des Planetenrades (8) zwischen den zwei Außenringen (11a, 11 b) radial entlang des Innenumfangs des Planetenrades (8) ein Bund (13) zur axialen Sicherung des Planetenrades (8) ausgebildet ist,
**dadurch gekennzeichnet, dass** an der Innenumfangsfläche des Planetenrades (8) mindestens ein Zwischenring (12b) zur axialen Positionierung der mindestens zwei Kegelrollenlager (9a, 9b) zueinander angeordnet ist, welcher an einer Außenumfangsfläche eine zum Bund (13) gerichtete und mindestens der axialen Länge des Bundes (13) entsprechende Aussparung (14) aufweist.

2. Planetengetriebe (2) nach Anspruch 1,
**dadurch gekennzeichnet, dass** der Bund (13) an einer axial nach innen gerichteten Stirnfläche einer der Außenringe (11 a, 11 b) zur Anlage kommt.

3. Planetengetriebe (2) nach Anspruch 1,
**dadurch gekennzeichnet, dass** der Bund (13) im Wesentlichen mittig zwischen den beiden Außenringen (11a, 11b) ausgebildet ist, wobei an den beiden axialen Stirnflächen des Bundes (13) jeweils ein Zwischenring (12b, 12c) angeordnet ist.

4. Planetengetriebe (2) nach Anspruch 3,
**dadurch gekennzeichnet, dass** die beiden Zwischenringe (12b, 12c) an ihren axialen Stirnflächen zur Anlage kommen.

5. Planetengetriebe (2) nach Anspruch 1,
**dadurch gekennzeichnet, dass** die mindestens zwei Kegelrollenlager (9a, 9b) eine O-Anordnung der Wälzlagerelemente aufweisen.

6. Planetengetriebe (2) nach einem der vorhergehenden Ansprüche,
**dadurch gekennzeichnet, dass** der mindestens eine Zwischenring (12b) und das Planetenrad (8) verschleißmindernde Oberflächen aufweisen.

7. Planetengetriebe (2) nach einem der vorhergehenden Ansprüche,
**dadurch gekennzeichnet, dass** zwischen dem mindestens einen Zwischenring (12b) und dem Planetenrad (8) eine Spielpassung (s) vorgesehen ist.

8. Planetengetriebe (2) nach einem der vorhergehenden Ansprüche,
**dadurch gekennzeichnet, dass** die axialen Stirnflächen des Bundes (13) und die axialen Stirnflächen des mindestens einen Zwischenringes (12b) hart gedreht und/oder plangeschliffen sind.

9. Planetengetriebe (2) nach einem der vorhergehenden Ansprüche,
**dadurch gekennzeichnet, dass** mindestens zwei Planetenräder (8) des Planetengetriebes (2) ein Geradverzahnung oder eine Schrägverzahnung aufweisen.

10. Windkraftanlage (1) mit einem Planetengetriebe (2) nach einem der vorherigen Ansprüche, welches zur Umwandelung einer langsamen Drehbewegung eines Rotors (3) in eine schnelle Drehbewegung zum Betrieb eines elektrischen Generators (4) vorgesehen ist, wobei eine Antriebswelle (5) des Planetengetriebes (2) mit dem Rotor (3) und eine Abtriebswelle (6) des Planetengetriebes (2) mit dem Generator (4) in Verbindung steht.
